# EUROPEAN PATENT SPECIFICATION

(11) **EP 4 639 302 B1**
(45) Date of publication and mention of the grant of the patent: **26.08.2026**
(21) Application number: 23837602.4
(22) Date of filing: 20.12.2023
(51) Int. Cl.: G05B 23/02

(54) **COMPUTER-IMPLEMENTED METHOD AND COMPUTER DEVICE FOR IDENTIFYING RISKS IN AN INDUSTRIAL PLANT, AND METHOD FOR OPERATING AN INDUSTRIAL PLANT**
COMPUTERIMPLEMENTIERTES VERFAHREN UND COMPUTERVORRICHTUNG ZUR IDENTIFIZIERUNG VON RISIKEN IN EINER INDUSTRIELLEN ANLAGE
PROCÉDÉ MIS EN OEUVRE PAR ORDINATEUR ET DISPOSITIF INFORMATIQUE POUR IDENTIFIER DES RISQUES DANS UNE INSTALLATION INDUSTRIELLE

(30) Priority: 23.12.2022 EP 22216524
(43) Date of publication of application: 29.10.2025
(73) Proprietor: BASF SE, 67056 Ludwigshafen am Rhein (DE)
(72) Inventor: BUELOW, Fabian, 68526 LADENBURG (DE); OSTROWSKI, Thomas, 67056 Ludwigshafen am Rhein (DE); KISSEL, Christian, 67056 Ludwigshafen am Rhein (DE); BADINSKI, Alexander, 67056 Ludwigshafen am Rhein (DE); KUNATH, Sascha Fabian, 67056 Ludwigshafen am Rhein (DE); ERTEKIN, Ege, 60488 Frankfurt (DE)
(74) Representative: BASF IP Association
(86) International application number: PCT/EP2023/087092
(87) International publication number: WO 2024/133555

(56) References cited:
- US-A1- 2002 049 625
- US-A1- 2012 317 058
- US-A1- 2020 285 988
- SINGLE JOHANNES I ET AL: "State of research on the automation of HAZOP studies", JOURNAL OF LOSS PREVENTION IN THE PROCESS INDUSTRIES, ELSEVIER, UNITED KINGDOM, vol. 62, 5 September 2019 (2019-09-05), XP085920514, ISSN: 0950-4230, [retrieved on 20190905], DOI: 10.1016/J.JLP.2019.103952

## Description

The present invention relates to a computer-implemented method for identifying risks in an industrial plant as well as to a method for operating an industrial plant. The present invention further relates to a corresponding computer device for identifying risks in an industrial plant.

During the planning and/or operation of an industrial plant, in particular of a chemical industrial plant, multiple parameters of the industrial plant need to be considered to ensure a safe operation of the industrial plant. The industrial plant often comprises multiple devices and the safety requirements can largely vary from one device to another. Analyzing the safety of the entire industrial plant can become very complex due to the interaction between devices and due to the size and complexity of such plants. The safety of the entire industrial plant can be analyzed manually. However, such an analysis may require multiple technical experts and may be very time consuming. Usually, a HAZOP technique (Hazard and Operability study) based on the ICI Hazop method is applied using defined key words in order to identify potential deviations from the normal operation.

US 2020/0285988 A1 discloses a machine learning (ML) based asset monitoring system that automatically determines damage mechanisms (DMs) and generates automatically updated visualizations of assets that include equipment and lines of a processing plant is disclosed. The asset monitoring system is communicatively coupled to the assets of the plant and continuously receives process parameters associated with the various processes and equipment in the plant. Corrosion loops (CLs) are identified and automatically demarcated by the asset monitoring system. DMs are predicted for each of the assets using a ML model based on the process parameters and the corrosion loops. The data regarding the DMs, CLs and the process parameters are used to obtain equipment risk rankings for the assets. Multi-dimensional visualizations of the assets that display the state of the plant assets in real-time are generated.

US 2002/049625 A1 discloses an automated artificial intelligence method and system for the design and implementation of engineering and manufacturing design services.

US 2012/317058 discloses a method for predicting risk and designing safety management systems of complex production and process systems.

It is one object of the present invention to provide an improved identification of risks in an industrial plant.

According to a first aspect, a computer-implemented method for identifying risks in an industrial plant is provided. The method includes:
receiving process data, the process data specifying a list of devices belonging to the industrial plant, how the devices are connected to each other, requirements for using the devices, and parameters relating to chemical substances to be used with the industrial plant;
generating a graph representing a digital twin of the industrial plant based on the process data, the graph comprising nodes representing the devices of the industrial plant and edges linking the nodes in accordance with the process data;
supplementing the graph with description data derived from the process data to obtain an augmented graph, the description data providing specificities of the devices and their connections;
identifying at least one risk in the industrial plant by determining at least one deviation between the augmented graph and predefined allowable values for process parameters for operating the industrial plant, and determining a cause and a consequence associated with the risk;
classifying (S5) the identified risk based on its likelihood and/or its seriousness to obtain a classification result, and/or determining (S5) a countermeasure against the identified risk, wherein classifying (S5) the identified risk and/or determining (S5) the countermeasure is carried out using at least one neural network receiving the deviation, the cause and the consequence of the risk as its input; and
outputting the classification result and/or the determined countermeasure.

The risk can be identified using the generated augmented graph. The risk can thus be determined in a reliable manner from the complete graph representation of the industrial plant. The method can also autonomously find a countermeasure or classify a risk using a neural network for classifying the risk. This increases the safety of the industrial plant and makes the process more efficient, while reducing the need for a manual analysis by a technical expert.

Moreover, the input into the neural network only needs to include the deviation, cause and consequence relating to an identified risk. In other words, the input into the neural network does not need to include any process data or process parameters, and in particular does not need to include data specifying the topology or constituent elements of the plant. Thus, the neural network can be implemented with fewer computing resources and can operate faster than a neural network that also receives these other types of data as input. Furthermore, by using such a neural network, the countermeasure takes into account the input data for selecting the countermeasure, i.e. cause and consequence.

In embodiments, identifying risks in the industrial plant by determining deviations between the augmented graph and predefined allowable values for process parameters for operating the industrial plant includes identifying causes for the determined deviations. Examples of such process parameters are the pressure in a device or pipe, the temperature of a chemical substance in a device or pipe, the filling level of a vessel, and the rate of a chemical reaction, but there is no limitation to these.

It is understood that process parameters for operating the industrial plant may include data that are independent of the actual operational state of the plant. For example, data indicative of duct fillings, valve positions and/or properties of processed chemical substances may also be considered process parameters. Description data, additional or alternatively, may include data linking a potential a fault with the status of plant elements. Potential limitations are for instance physical properties, e.g. the pressure cannot rise above the vapor pressure at a maximum temperature.

Thus, identifying risks by determining deviations, additionally or alternatively, may comprise the step of comparing the augmented graph with a predetermined graph), wherein the predetermined graph represents the topology of the industrial plant and is indicative of one or more specific risks. The specific risks may be represented by a risk score on a scale. E.g. a low risk score indicates a tolerable risk, and a high risk score indicates a situation in the plant calling for an intervention.

Classifying the identified risks may involve classifying risks with respect to likelihood and seriousness.

The input into the at least one neural network preferably does not include any process data or process parameters. Moreover, the input into the at least one neural network may consist only of the deviation, the cause and the consequence of the risk, but may optionally also include material data (e.g. toxicity, flammability). Thus, the complexity of the neural network and hence the necessary computing resources can be kept low, while still achieving a risk classification with high accuracy.

In embodiments, a first neural network is used to classify the identified risks in the industrial plant with respect to their likelihood or seriousness and a second neural network is used or deployed to determine a countermeasure against the identified risk.

The industrial plant (or production facility) is preferably a chemical industrial plant in which chemicals are processed and/or a petrochemical industrial plant in which chemical products obtained from petroleum are processed. The industrial plant can include multiple devices which are connected to each other, for example through pipes. Such a plant may include several hundred to several thousand devices. Examples for devices of the industrial plant include vessels, valves, filters, heat exchangers, evaporators, dryers, mixers and the like.

A risk in an industrial plant may result in chemicals escaping from the industrial plant and can lead to a release of energy (for example as flying debris and/or hot gases), a release of toxic substances, a release of flammable gas clouds, a release or corrosive products or the like as a consequence.

A purpose of the risk identification can be to avoid occurrence thereof. This in particular allows operating the industrial plant in line with predetermined safety standards. The industrial plant can be operated such as to protect the operators and the environment. A safely operated industrial plant also allows increasing its operation time, in particular because shutting down the industrial plant can be prevented. Since the term "safety" or "safe industrial plant" is difficult to quantify ("safety" is usually a subjective impression), it is common for operators of an industrial plant to define a residual risk that they will tolerate for that industrial plant. This residual risk is typically in the order of 10⁻⁵ to 10⁻⁶ fatalities per year. This target residual risk may be achieved through so-called primary measures, such as countermeasures that prevent substances from escaping.

The process data is data that describes the set-up of the industrial plant and includes the devices of the plant, their connections and their usage requirements. The process data can form a set of data that completely and thoroughly describes all parts of the industrial plant, in particular the characteristics of the devices and the requirements for safely operating them ("requirements for using the devices"). Example of such safety requirements may be maximum pressures or temperatures or the like. The process data may include technical data sheets. The process data may further include information about the processes (for example the manufacturing processes) to be performed by the industrial plant. These may be provided as process diagrams.

The list of the devices belonging to the industrial plant can be an exhaustive list. How the devices are connected to one another can include information about pipes, such as their location, which devices they connect, the pipe's diameter, the pipe's material, the substances that may pass through the pipe and the like. The parameters relating to the chemical substances (also referred to as "substance data" in the following) to be used include the name of the chemical substance, their density, viscosity and the like at certain process conditions specified by e.g. temperature and pressure values.

The substance data can be provided on the basis of commercial and in-house databases, which also describe the dependence of the substance data on the process conditions (i.e. pressure, temperature, flow rate). In addition to rather classical substance data such as vapor pressure curves, melting points, temperature dependencies of densities or viscosity dependencies, typical safety-related characteristic data may also be included in the process data, such as flash points/lower ignition temperature, ignition temperatures or decomposition temperatures. While flash points, for example, are simply available via safety data sheets that can be read out automatically on the basis of a CAS number of the substance, safety-related characteristic data such as ignition temperatures or decomposition temperatures require the integration of additional data sources, both public (e.g. with regard to the volume dependence of the ignition temperature) and in-house measurements (e.g. with regard to so called self accelerating decomposition temperatures). The completeness of the process data is important to be able to evaluate the possible effects for all postulated dependencies.

The resulting digital twin is created based on the process data. The digital twin can be a complete digital representation of the industrial plant, in particular of all devices thereof, including their vertical and/or horizontal relative locations (i.e. 3D model incorporation of the plant). The digital twin is represented as a graph including nodes and edges (links). The nodes can represent the devices or parts thereof. The edges can correspond to physical and/or conceptual connections (interdependencies) between the devices or device parts represented as nodes.

To generate the graph, a data integration of the process data may be performed. An important part of the creation of the graph is the conversion of flow diagrams of the process data into computer-evaluable data by creating paths. This can be done by graphical evaluation of flowsheets, e.g. in the form of vector diagrams. However, to reduce the risk of information loss, the use of database driven piping and instrumentation diagram (P&ID) data, e.g. from so-called "Smart P&IDs" by Hexagon or from DEXPI (Data Exchange in the Process Industry) data, is more target oriented. In addition to the pure connections (i.e. pipelines) that are shown, the database driven P&IDs can also contain information about the logic of the interconnection of the process plant, namely control loops for e.g. pressure, temperature, level or flow. In addition, any already implemented countermeasures, mechanical (such as safety valves) or safety circuits are also included in the graph.

By further integrating data such as pipe lengths, product types , 3D data as well as the dimensioning and design data of apparatus and machines (e.g. pumps) into the path creation described above, a digital twin of the existing plant is created, which not only contains the connections of the devices among each other, but can also describe the spatial arrangement of the devices. In this way is it possible to apply the risk identification described in the following and to obtain correct and complete results, because this digital twin now contains all chemical substances, devices, and linkage information as well as the spatial layout of the industrial plant.

The augmented graph can be a labelled graph including descriptions (description data, so-called attributes) associated with the individual nodes and edges (links) of the graph. Such description data can include the name of the represented device, the requirements for using the devices and the like, which is derived from the process data.

The risks may be identified in a fully autonomous manner, that is, without further intervention of an operator after the risk identifying step is started (i.e. at the push of a button), by comparing the information from the augmented graph with predefined allowable values for process parameters for operating the industrial plant. The predefined allowable values for process parameters (also referred to as "permissible values") can be indicative of safety requirements for the entire industrial plant. The risk identification can be performed using an algorithm (solver) acting on the described graph representation.

During the risk identification, the consolidated data (augmented graph) is used. In the risk identification, keywords of a HAZOP (hazard and operability study) procedure are applied to iterate deviations of the process data, e.g. pressure, temperature, concentration, flow, quantity or level. The keywords used based in the ICI Hazop technique are "no/not", "as well as", "more", "less", "reversed", "part of" and "other than". Some causes for deviations can been determined in advance, typically controller failure or operator error. The process values calculated via the solver (pressure, temperature, ...) are compared with the permissible parameters at each crossing point (node) or link (edge). As soon as the permissible values are exceeded, this leads to the determination of an impact, which is indicative of a risk. By making use of the graph representation of a plant, and of expert knowledge implemented in the risk identification algorithm, process-related causes for deviation-impact tuples can be found (e.g. hydrostatic pressure between two vessels overlooked during the design phase of a plant, or a pump replaced by a stronger pump causing a "pressure high" deviation).

Typical impacts to be expected when design parameters are exceeded are the release of energy (e.g. flying debris, hot gases), toxic substances (especially inhalation toxic substances), flammable gas clouds (potentially with ignition) or the release of locally critical substances, e.g. corrosive or dermatologically critical substances. In some cases, the expected quantities or quantities/time are calculated quantitatively and serve to further estimate the impact. In the case of a loss of the primary containment, for example, the Dow Exposure Index can be used to determine the critical radius in which personal hazards are to be expected in the case of toxic substances. Similar correlations are also applicable for the release of flammable gases.

Since it is desirable to avoid effects involving substance leakage, suitable countermeasures must be determined for this purpose. The quality of the countermeasure depends on the risk, i.e. the product of probability of occurrence and impact using a risk graph or risk matrix. For the probability of occurrence, literature data can be used. Alternatively, internal company failure probabilities can be used, which result from the evaluation of actual occurrence probabilities in regular process operation. With regard to the quantification of the impact (risk of fatalities, irreversible injuries, ambulance visits), literature data or internal company experience can also be used.

Optionally, upon identifying the risks, the method includes subsequently checking to what extent countermeasures against the identified risk are already in place, e.g. safety valves or circuits that prevent inadmissible conditions. If this is the case, they will be compared in terms of quality with the quality required according to the risk determination. If a substance leakage is not to be expected based on the design data, this can also interpreted as a countermeasure ("safe by design"). In the case of safety valves and bursting discs, their suitability for the expected substance quantity is checked on the basis of the process data, as well as the extent to which multiphase outflow is to be expected. In addition, internal company requirements for the design of pressure relief devices can be taken into account when checking the design.

If the review of the countermeasures shows that sufficient risk minimization cannot be achieved, the process data and the identified risk information (in particular deviation, cause, effect, risk) can be used to classify the identified risk and/or determine a countermeasure using the neural network. Optionally, even if the countermeasure is sufficiently dimensioned, the neural network can be used to check whether there are more efficient or less expensive alternatives.

The neural network serves to define suitable countermeasures on the basis of the findings of the previous method steps, with which the process risks can be sufficiently reduced in order to ultimately achieve the entrepreneurially or socially defined residual risk. The neural network can be a trained neural network. The neural network (in particular neural network model) can be trained on the basis of historical data. In addition, typical recurring risks are stored in order to preferentially propose proven effective countermeasures. Furthermore, incidents that have occurred can be incorporated as additional input into the network.

In addition to the pure suggestion function of historical data, the neural network can be used to identify or select optimized countermeasures, i.e. the objective is not only to select the countermeasure with the aim of achieving the residual risk, but also to identify the most cost-effective countermeasure. For example, a maximum-likelihood approach can be used for this, as it can map various parameters with which the possible countermeasures are evaluated.

Additionally to determining countermeasures, an adjusted neural network may be used to classify the identified risk based on how likely or serious an occurrence thereof would be.

The classification result and/or the determined countermeasure can be output, in particular to an operator of the industrial plant. The step of outputting can also be a step of providing and/or storing the classification result and/or the determined countermeasures in a convenient software format for later use.

In other words, the described method can be defined as follows. The proposed solution solves the described problem by the following steps 1) to 4).

Step 1) can include an automated processing of descriptive data from various sources into a representation of a corresponding plant as a directed graph. Human interaction may only be necessary to correct problems with insufficient data quality.

Step 2) can include enrichment of the graph representation with descriptive data such as pipe diameters or pump performance (e.g. by a human operator) and subsequent simulation by means of solving conservation equations. Here, various scenarios can be calculated in parallel to achieve a representation of the chemical plant under investigation at different operating or fault states.

Step 3) can include detection of defined risks by means of graph representation and corresponding attributes belonging to scenarios. The widely used HAZOP procedure can be used here, i.e. deviations are detected by rule-based checks, causes per deviation are found and effects are determined. This step may be performed either by a human operator/technical expert or partially or entirely autonomously.

In step 4), based on the found tuples "deviation, cause, impact", both the severity and the probability, as well as the company-specific risk class can be determined by means of modern neural network architectures. Corresponding countermeasures for the risks found can be, depending on the case, determined directly on the basis of rules, or suggested by a neural network in the same way as severity and likelihood. The corresponding so-called "recommender" system can be trained using data from thousands of historical security observations and evaluated at regular intervals by expert evaluations.

All the steps described above result in a system that can be used quickly and largely autonomously to support risk assessments. Due to the inherent fact that the proposed solution is digital, it can take over the time-consuming documentation part. Experts can focus on special cases and/or complicated problems.

The method simplifies and improves safety assessments, both of running plants within the scope of safety assessments of old plants or new installation of apparatus (so-called "MoC processes", MoC standing for "management of change"), and of new plants within the scope of EHS (Environment, health and safety) processes. Through the automatic evaluation of the data, in particular P&ID flow diagrams, substance data, equipment data, as well as the data from existing plants, both an accelerated processing as well as a harmonization of the results and thus of the concepts are achieved. This is advantageous both in terms of responsible care (quality and reliability of the protection) and economically (most cost-effective protection with several conceivable protection concepts). Due to the checking, in the planning process, of the extent to which the relevant hedging concepts are adhered to and due to the use of typicals, it is to be expected that both cost-efficient countermeasures are installed (lower investment and/or lower maintenance costs) and a faster project implementation is achieved (time-to-market).

Through the automatic evaluation of the data, an improved evaluation of possible safety risks can be achieved for all electronically available P&ID flow diagrams (so-called " database driven P&IDs") within the scope of projects, MoC processes and conventional plant assessments.

According to an embodiment, the process data includes data in different formats and/or from different sources.

The different formats can include tables, text, flowcharts, computer-aided engineering (CAE) models or the like. The different sources can include manuals from the manufacturer of the devices, historical data, measurement data or the like. Including data in different formats and/or sources into the process data allows including various data types and more accurately representing the industrial plant by the process data.

The cause, in particular for a potentially critical scenario, may be an event that caused the deviation. Moreover, the consequence may include at least one of a breakdown of a component of the industrial plant, flying debris, and a leakage of a chemical to the outside of the industrial plant.

According to a further embodiment, the process data comprises design data describing a planned industrial plant.

In particular, the method according to this embodiment is performed in a design step of the industrial plant (for a planned industrial plant), namely before assembling the industrial plant and/or before operating the industrial plant. It may also be part of a redesign step in which an existing industrial plant is to be modified.

Such a redesign can for example include exchanging a particular pump by another pump. This replacement process must be evaluated in terms of safety. In order to optimize this process, the digital twin can be used to evaluate a) directly and b) over the entire system (industrial plant) the influence of the system change on the entire system. In this way, it can already be checked in the engineering process whether the plant can continue to be operated safely. This includes checking whether new causes or other effects result from the planned change or if existing countermeasures are no longer sufficient. For example, the installation of a different pump a) may result in previously intrinsically safe equipment (devices) no longer being so (e.g. because the zero head is increased from 80 m to 120 m, i.e. equipment with 8 barg max. design pressure is now no longer intrinsically safe). Another effect could be that the flow rate with the new pump to be installed exceeds the blowdown capacity of a safety valve. As a result of the system change, the characteristic values of the new pump are entered as part of the process data and, if necessary, the network topology and/or its attributes are adapted as part of the MoC (management of change) process (e.g. due to changed pipe geometries). In the second step, risk identification is started and it is checked in this step whether new risks are identified or existing countermeasures are sufficient. If the existing countermeasures are not sufficient, new countermeasures and risk classifications are identified using the neural networks.

In particular, the method steps according to the first aspect or according to an embodiment thereof are not necessarily performed for an industrial plant in operation. For example, the process data does not necessarily include any measurement data from the industrial plant itself.

According to a further embodiment, the process data includes piping and instrumentation diagram (P&ID) data and/or computer-aided engineering data.

According to a further embodiment, the parameters relating to chemical substances include a phase diagram, a steam pressure curve, a melting point, a dependence of density upon temperature, a dependence of viscosity upon temperature, an ignition temperature, and/or a decomposition temperature of the chemical substance.

According to a further embodiment, the graph is a digital twin of the entire industrial plant, including all devices thereof and connections between these devices and the horizontal/vertical position thereof.

The graph and in particular the augmented graph is a representation of the entire industrial plant, allowing for a complete and accurate risk analysis.

According to a further embodiment, the method further includes:
detecting errors and/or inconsistencies in the received process data; and
outputting and/or correcting the detected errors and/or inconsistencies in the received process data before generating the graph.

In order to correct any errors in the received process data, in particular in flow diagrams, the device designs or of substance data, there is the possibility to identify and repair such errors. This is important because a faulty network structure in the graph can lead to an incorrect risk assessment. The error analysis is done by checking the consistency of the process data and correcting it if necessary. It is important here to feed the adjusted data back into the original sources so that errors are avoided when the digital twin is recreated, as incorrect data may be used again when the digital twin is created.

The resulting corrected process data is a significant aid for carrying out safety assessments even according to conventional methods, since the reliability of necessary data and, above all, their consolidation is an important, but time-consuming, preliminary work for carrying out HAZOP studies, since without reliable data a risk analysis is not possible or incorrect conclusions are drawn.

According to a further embodiment, the neural network is a neutral network that was trained using labeled historical data relating to previous faults in industrial plants.

For example, the historical data is retrieved from other industrial plants and indicative of faults that occurred there, the impact (consequence) of the faults, the cause of the faults and/or the structure of the industrial plant on which the fault occurred. The historical data can be labeled manually to indicate a risk classification or a possible countermeasure, for example.

According to a further embodiment, the neural network is a neural network that was trained using training data sets that include a label indicating a cost function, wherein the neural network determines the countermeasure such as to minimize the cost function.

The neural network therefore allows determining an optimum countermeasure that minimizes the cost function.

According to a further embodiment, the cost function indicates an optimized installation based on the costs for installation and maintenance of the countermeasure and/or an outage time of the industrial plant for installing and/or maintaining the countermeasure.

Reducing and/or minimizing the cost function is thus advantageous in that it optimizes the time, installation effort, maintenance effort and the like of the countermeasure. The cost function may also include financial impacts of the countermeasure, such as an installation cost of the countermeasure, a maintenance cost of the countermeasure, an outage cost of the industrial plant for installing the countermeasure, or the like.

As an example, the trained neural network may allow selecting between the installation of a protective device that switches off all pressure generators, a mechanical safety device such as a safety valve and an intrinsically safe design. A table might show examples of possible parameters, but this must be explicitly evaluated for each application determined by the process data. On this basis, the maximum likelihood function can be optimized using the quantified parameters from the table (plus further parameters if necessary) as a function of the process, and thus the long-term cost-effective method can be determined, both for the individual countermeasure and in particular for the sum of the countermeasures in the entire plant. Although the optimal individual countermeasures for individual apparatuses can be determined relatively easily, in a complex plant with several hundred to several thousand countermeasures, the possible interrelationships are too complex to keep track of the optimal solution. In principle, the maintenance plan can also be included in the optimization function, or it is part of the optimization function to create the maintenance plan (e.g. which parts of the plant can or must be inspected together and are therefore to be prepared for an inspection, and thus, if necessary, also to be connected to neighboring devices in such a way that they cannot be blocked off) and therefore to be taken out of operation in any case. Additionally, special properties of the materials used in the process as well as process conditions can be incorporated (e.g. fouling, cracking, forming solids).

According to a further embodiment, the method steps are performed as part of the design of the industrial plant, and/or as part of a redesign of the industrial plant in which a device and/or a process performed by the industrial plant is modified.

According to a further embodiment, a method for operating an industrial plant comprises the above-described method for identifying risks in an industrial plant, wherein a countermeasure against the identified risk is determined, and further comprises carrying out the determined countermeasure.

According to a second aspect, a computer device for identifying risks in an industrial plant is provided. The computer device includes a processor for performing:
receiving process data, the process data specifying a list of devices belonging to the industrial plant, how the devices are connected to each other, requirements for using the devices, and parameters relating to chemical substances to be used in the industrial plant;
generating a graph representing a digital twin of the industrial plant based on the process data, the graph comprising nodes representing the devices of the industrial plant and edges linking the nodes in accordance with the process data;
supplementing the graph with description data derived from the process data to obtain an augmented graph, the description data providing specificities of the devices and their connections;
identifying risks in the industrial plant by determining deviations between the augmented graph and predefined allowable values for process parameters for operating the industrial plant;
using a neural network, classifying the identified risk based on its likelihood and its seriousness to obtain a classification result, and/or determining a countermeasure against the identified risk; and
outputting the classification result and/or the determined countermeasure.

The embodiments and features described with reference to the computer-implemented method according to the first aspect or an embodiment thereof apply mutatis mutandis to the computer device according to the second aspect or according to an embodiment thereof.

According to an embodiment, the computer device is configured to perform the method steps according the first aspect or an embodiment thereof.

According to a third aspect, a computer program product comprising instructions which, when the program is executed by a computer (device), cause the computer to carry out the method of one of the first aspect or an embodiment thereof is provided.

The embodiments and features described with reference to the computer-implemented method according to the first aspect or an embodiment thereof apply mutatis mutandis to the computer program product according to the third aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

According to a further aspect, a computer-readable medium storing computer program instructions, wherein the computer program instructions, when executed by a processing device, cause the processing device according to aspects or embodiments disclosed above or below with respect to specific examples, cause the processing device to perform operations comprising the method as disclosed herein. The computer-readable medium is, in particular, a non-transitory computer-readable medium.

In embodiments, a computer-program or computer-program product comprises a program code for executing the above-described methods and functions by a computerized device when run on at least one computerized device, in particular when run on a personal computer. A computer program product, such as a computer program means, may be embodied as a memory card, USB stick, CD-ROM, DVD, hard disk or as a file which may be downloaded from a server in a network. For example, such a file may be provided by transferring the file comprising the computer program product from a wireless communication network. In embodiments, the method is implemented as a web app.

Further embodiments, features and advantages of the present invention will become apparent from the subsequent description and dependent claims, taken in conjunction with the accompanying drawings, in which:
- Fig. 1: shows an example of an industrial plant;
- Fig. 2: shows a computer-implemented method for identifying risks in an industrial plant according to a first embodiment;
- Fig. 3: shows a computer-implemented method for identifying risks in an industrial plant according to a second embodiment; and
- Fig. 4: shows an example of an augmented graph.

In the Figures, like reference numerals designate like or functionally equivalent elements, unless otherwise indicated.

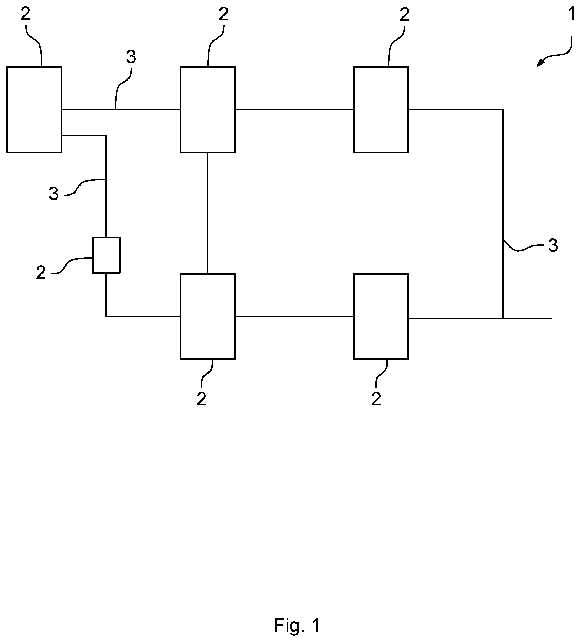

Fig. 1 shows an example of a chemical industrial plant 1. The industrial plant 1 is for processing chemical substances to manufacture a product such as a cosmetic product. The industrial plant 1 includes multiple devices 2 connected through pipes 3. Examples of devices 2 are valves, filters, heat exchangers, evaporators, dryers, and mixers. The layout of the industrial plant 1 is exemplary and any suitable layout for a chemical industrial plant 1 can be used instead.

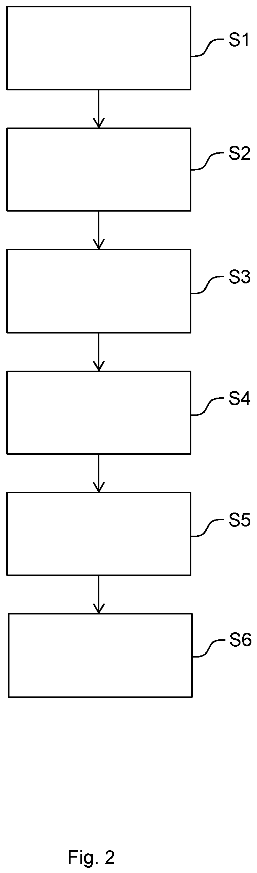

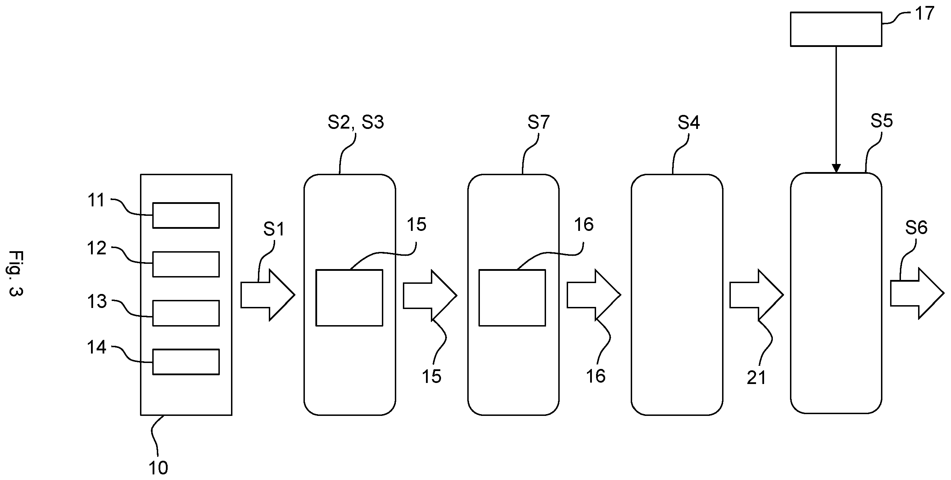

Before constructing and assembling the industrial plant 1, it is desirable to perform a risk analysis of the planned industrial plant 1. This is done achieved by the method of Fig. 2 or Fig. 3.

Fig. 2 shows a computer-implemented method for identifying risks in an industrial plant 1 according to a first embodiment. Fig. 3 shows a computer-implemented method for identifying risks in an industrial plant 1 according to a second embodiment. The steps S1 to S6 are identical in the embodiments of Fig. 2 and 3 and will therefore be described with reference to both Fig. 2 and 3. Then, step S7, which is specific for the embodiment of Fig. 3, will be described in view of Fig. 3.

Here, "computer-implemented method" means that at least one of the steps of the method is implemented by a computing device such as a personal computer, and in particular on a processor thereof. More specifically, the methods of Fig. 2 and 3 can be configured to be partially or entirely implemented by such a computing device. It should be noted that dedicated hardware to realize a neural network can also be regarded as a "computing device".

In step S1, process data 10 is received. The process data 10 can be input by a user via a user interface, for example via a graphical user interface (GUI), of the computer device. As in particular shown in Fig. 3, the process data 10 includes database driven P&ID data 11 and/or information based by the DEXPI format, which specifies how the devices 2 are connected to each other (in particular, which device 2 is connected to which device 2) and equipment data (which indicates the devices 2, as well as properties of the devices 2, requirements for using them, and the like). The process data 10 further includes piping information 12 specifying properties of the pipes 3 connecting the devices 2. The process data 10 further includes substance data 13 specifying parameters relating to the chemical substances processed in the industrial plant 1 and including mass densities and viscosity information of the substances. The process data 10 may also include three dimensional a CAE model (CAE data 14) of the plant 1 which includes position information about the devices 2 within the industrial plant 1. In addition, the process data 10 includes all process parameters that are necessary for a simulation of the process carried out by the industrial plant 1, such as the amounts and starting temperatures of raw chemicals filled into the various vessels of the industrial plant 1, temperature and pressure profiles of devices of the industrial plant 1, initial valve settings, as well as information on the control logic affecting valve settings, heating and cooling mechanisms, and so on.

As indicated above, the process data 10 received by the computer device thus includes data having different formats. The process data 10 is used to, possibly automatically, generate, in a step S2 of the method of Fig. 2 and 3, a graph representing a digital twin of the industrial plant 1. In step S3, the graph is supplemented with description data 20 to form an augmented graph 15. The description data 20 is associated with the edges and nodes of the graph, which are representative of the pipes and devices of the industrial plant 1. Examples of such description data 20 are the diameter of a pipe and the capacity of a pump of the industrial plant 1. In a preferable embodiment, the augmented graph is generated automatically, and may be corrected manually in case that the generated graph contains errors.

The digital twin is generated by making use of the data 11 (structure) of the database driven P&IDs. These are digital P&IDs (piping and instrumentation diagrams) in which attributes are assigned to elements such as vessels or pipes. This allows further information to be retrieved in commercial tools by clicking on a corresponding element. The data normally available in tabular form (or in DEXPI format (see also DEXPI - Data Exchange in the Process Industry)) is used and a graph representation (network representation) of the plant is built from it.

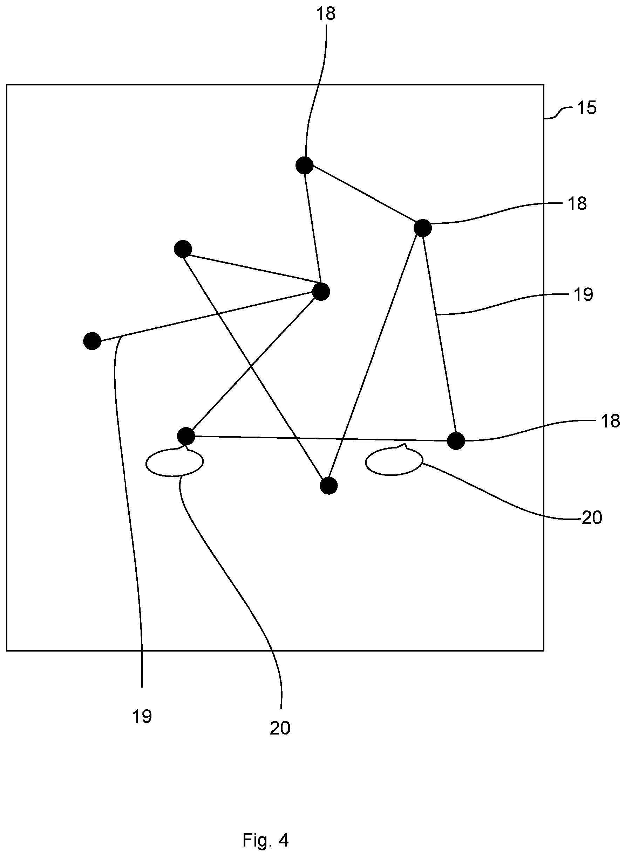

An example for an augmented graph 15 is shown in Fig. 4. In detail, the augmented graph 15 includes a network of nodes 18 and edges (links) 19 connecting the nodes 18. In Fig. 4, the nodes 18 are represented by dots and the edges 19 are represented by lines. Each node 18 represents one of the devices 2 of the industrial plant 1. The edges 19 therebetween represent the pipes 3 between the devices 2 and any other interdependence between multiple devices 2 (for example, if one device 2 heats the substance, then another device 2 might have to cool the substance later in the process, even if the two devices 2 are not directly connected). The nodes 18 and the edges 19 form the graph representing the industrial plant 1.

The augmented graph 15 comprises, in addition to the nodes 18 and the edges 19 of the graph, the description data 20. This description data 20 is derived from the process data 10 and specifies the information relating to the different nodes 18 and edges 19. The description data 20 can be provided as a list attached to the respective nodes 18 and edges 19. In the example of Fig. 4, only one node 18 and one edge 19 have description data 20 attached thereto, it is however understood that all nodes 18 and edges 19 may include such description data 20. The description data may be attached to the graph automatically, or may be attached manually to the graph by an operator. It is also possible that the description data are attached to the graph automatically and then manually revised by an operator in case of errors.

In a step S4, the augmented graph 15 is analyzed, e.g. by the computing device, to identify risks in the industrial plant 1. This is done by comparing the augmented graph 15 with predefined allowable values for process parameters and determining deviations. The predetermined allowable values may be entered as part of the process data in step S1, or may be calculated based on the parameters entered in step S1.

More specifically, the analysis in Step S4 may include performing a simulation of the industrial plant 1 based on the augmented graph 15, while comparing the predefined allowable values with simulated values.

The predefined allowable values include such parameters as a maximally allowable operating pressure and a maximally allowable operating temperature (also known as "design pressure" and "temperature") for a plurality or all of the devices and pipes constituting the industrial plant 1. However there is no limitation to these and the predefined allowable values may also include other parameters, such as the filling height of certain vessels, the flow speed of fluids or the presence of certain substances in certain parts of the industrial plant 1 or the like. The predefined allowable values are associated with devices and pipes of the industrial plant 1. For example, a given pipe may be associated with a maximally allowable operating pressure of 10 bar and a maximally allowable operating temperature of 200°C.

During the simulation, the computing device calculates operating parameters, including pressures and temperatures, at various locations in the industrial plants 1 and compares them with the predefined allowable values. If a simulated operating parameter lies outside the range defined by the corresponding predetermined allowable value, then this is regarded as a deviation and recorded by the computing device. For example, if the maximally allowable operating pressure of a given pipe P is 10 bar and in the course of the simulation, the calculated (simulated) pressure in that pipe reaches a maximum pressure of 12.3 bar, then this is recorded by the computing device. The format of this record may be for example: "Pipe P: +2.3 bar", indicating that the pressure in pipe P was exceeded by 2.3 bar. Optionally, one or more time stamps may be added to this record. The time stamps may also indicate a period of time during which the predetermined allowable value was exceeded.

Now, the predefined allowable values do not necessarily have to be maximally allowable values, but may also be minimally allowable values. Moreover, it is also possible that a deviation is only identified if a certain parameter is within a certain range for longer than a predefined period of time. For example, it is possible that a deviation in the pipe P is only identified if the temperature in that pipe exceeds a first temperature (e.g. 200°C) but stays below a second temperature (e.g. 250°C) higher than the first temperature for more than a certain period of time (e.g. 10 minutes), but in any case if the temperature in that pipe exceeds the second temperature.

The simulation is carried out by calculating the state of the industrial plant 1, including all relevant process parameters such as temperatures and pressures, at predetermined time intervals. The length of these intervals depends on the type of process performed by the processing plant and may be in the order of microseconds or seconds, for example. The simulation may involve solving conservation equations at every single time interval.

The deviations identified by the simulation correspond to identified risks. These identified risks are then listed in a table 21.

Next, the causes for the deviations and the consequences of the deviations are determined and associated with the corresponding deviation.

The cause of a deviation is the event that caused the deviation. Some examples of causes of deviations are: controller failure, operator error, incorrect choice of devices (e.g. a pump replaced by a stronger pump leading to excessive pressures) and the like. The cause may be in particular a primary cause, such as failure of a pump, internal leakage of a heat exchanger or a cooling pipe, or external conditions (sun radiation, frost/freezing). The "cause" may be derived from iteration of the HAZOP analysis that led to the deviation. The cause of a given deviation may be identified either manually or automatically. In the case of a manual identification of the cause of the deviation, an operator analyses the deviation and its context and adds the cause of the deviation to the table 21. In the case of an automatic identification, an expert system may be used to automatically identify the cause of the deviation. Such an expert system may be implemented by a fuzzy logic or a neural network or the like. The format of the cause may be text form, e.g. "controller failure" or "valve V incorrectly set to OPEN by operator" or the like.

The consequence of a deviation describes the abnormal state of the processing plant 1 that is the result of the deviation. Typically, the consequence is a breakdown of a component (i.e. pipe or device) of the industrial plant 1 and/or a leakage of a chemical to the outside of the industrial plant 1. The breakdown of a component may be the rupture of a wall of a pipe or device. The consequence (e.g. flying debris, release of e.g. toxic or flammable components and the like) is one part of the risk evaluation.

In accordance with one embodiment, in step S5, the computer device uses a trained neural network trained with historical data 17 to classify the identified risk or risks. The neural network accepts the deviation, the cause and the consequence of the risk determined in Step S4 as its input. In one possible embodiment, only the cause and the consequence of the risk are given as input into the neural network. As noted above, the values of deviation, cause and consequence may be given in text form, i.e. as a string. In that case, their values may be delineated from each other by a comma or semicolon or other suitable mark. Thus, an example of a possible input into the neural network is:
"pipe P: +2.3 bar; valve V: incorrectly set to open; breakdown of pipe P"

Another example of a possible input into the neural network is:
deviation: pressure increase in pipe P
cause: Valve V incorrectly set to open
consequence: Pressure increase of pipe P 2,3 bar above design pressure leading to breakdown of pipe P.

Needless to say, the input into the neural network may also have another format. For example, the input values may also be encoded into suitable numerical values or the like.

The output of the neural network in this embodiment is a classification of the risk that is represented by the input. The neural network may classify the risk in accordance with its likelihood and/or seriousness. The likelihood may be a probability, represented by a numerical value ranging from 0 to 1 or from 0% to 100%, indicating the probability that the consequence occurs, e.g. within the next year of operation of the industrial plant 1. Alternatively, the likelihood may indicate the frequency of the consequence on a suitable scale. For example, the likelihood may be classified as shown in the following Table 1.

**Table 1**

| **Frequency** | **Likelihood** | |
|---|---|---|
| Immanent | Frequent | 0 |
| 1 h - 1 day | Very probable | 1 |
| 1 day - 1 year | Probable | 2 |
| 1 - 10 years | Occasional | 3 |
| 10 - 100 years | Remote | 4 |
| 100 - 1000 years | Unlikely | 5 |
| > 1000 years | Impossible | 6 |

Table 1 lists the timeframe at which the consequence can be expected. For example, if a given consequence is expected to occur within the next six months, then its likelihood is classified as "probable". As shown in the right-most column, the likelihood may also be associated with a numerical value for further processing.

The seriousness of the consequence may be classified in a similar manner. That is, the seriousness may be classified into the four classes "negligible", "marginal", "critical" and "catastrophic", depending on the impact of the consequence. For example, the classification of the seriousness may depend on the number of casualties occurring in the case of the consequence, or the damage (monetary or otherwise) caused by the consequence. Also the seriousness may be represented by a numerical value, as appropriate.

Based on the likelihood and the seriousness, the risk class can be calculated. One way to calculate the risk class is by employing a risk/hazard matrix in a generally known manner. Such a risk/hazard matrix associates specific values of likelihood and seriousness with specific risk classes. The risk class may give an indication to the operator on the urgency to take action. For example, risk classes may rank from risk class A (lowest) to risk class F (highest), with risk class A indicating that no action or countermeasure is necessary, and risk class F indicating that immediate action or countermeasures are necessary.

The neural network outputs at least one or all of the seriousness, the likelihood and the risk class. If the neural network outputs only the seriousness and the likelihood, then the risk class can be calculated by the computing device e.g. by using a risk/hazard matrix. Thus, in one possible embodiment, the neural network determines and outputs the likelihood and the seriousness, but not the risk class. In another possible embodiment, the neural network determines and outputs only the risk class, and uses the values for likelihood and seriousness only for its internal calculations, or determines the risk class without determining likelihood and seriousness.

The neural network includes at least an input layer and an output layer, and may also include one or more intermediate or hidden layers. Any suitable neural network may be used, including a self-developed neural network. The neural network may be based on a text-to-text transformer model architecture, such as LaMDA or BLOOM. Potentially applicable neural network models also include GPT3 or GPT4.

The neural network is a neural network that was trained with training data. The training data may include data sets including the same input values (i.e. deviation, cause and consequence) as well as labels indicating the output values (e.g. likelihood and seriousness). The training data may be historical data that includes data on events that actually occurred in industrial plants. The training data may include at least 1.000, preferably 20.000, more preferably 500.000 such data sets. The training data is not limited to historical data, but may also be generated by other methods, or may include not only historical data but also data sets that are generated from those historical data, e.g. through expansion, interpolation or the like. Furthermore, defined typicals for potential countermeasures and/or scenarios may be included, e.g. scenarios for failure of pumps depending on the type of pump.

In accordance with the above-described embodiments, the input into the neural network only needs to include the deviation, cause and consequence relating to an identified risk. Thus, the input into the neural network does not need to include any process data or process parameters, and in particular does not need to include data specifying the topology or constituent elements of the plant. Thus, the neural network can be implemented with fewer computing resources and can operate faster than a neural network that also receives these other types of data as input. It has been found that very precise results can be achieved even based on these relatively few parameters.

In the above-described embodiment, the neural network determines and outputs at least one or all of the seriousness, the likelihood and the risk class as the classification result. In another embodiment, the neural network determines and outputs, additionally or alternatively, a countermeasure against the identified risk. The countermeasure can be for example the addition or substitution of one or more of the devices or pipes, such as the addition of a safety valve or the substitution of a pipe with a pipe made of a different material to avoid leakages, for example. Other examples of countermeasures are certain operations within the industrial plant 1, such as the opening or closing of a certain valve, shutting down one or more devices of the industrial plant 1 or even shutting down the industrial plant 1 entirely.

The countermeasure does not necessarily have to be determined by a neural network. For example, in another embodiment, the neural network determines and outputs the seriousness and the likelihood of the consequence, and the countermeasure is determined not by a neural network, but by a rule-based algorithm, look-up table or the like. If the countermeasure is determined by a neural network, then a label indicating a countermeasure that may be taken in response to the event may be included the data sets, in addition to the tuple including deviation, cause and consequence.

The countermeasure may be determined by the same neural network that carries out the risk classification, but risk classification and determining a countermeasure may also be carried out by separate neural networks.

In further development of the invention, the neural network determines a countermeasure that is optimal in view of cost performance. In this case, the labeled training data sets may include a label indicating a cost function. The cost function indicates the costs for implementing the countermeasure associated with the data set. These costs include not only the installation costs, but also the maintenance costs of the countermeasure. The neural network determines the countermeasure such as to minimize the costs.

In a step S6, the resulting risk, classification result and/or determined countermeasure of step S5 is output to a user, for example on a display of the computer device, or stored. The output may include observed deviations between the augmented graph 15 and the predefined allowable values for process parameters (the risks), the causes to the risks, the consequences of the risks, the risk classes (classification result) and/or the determined countermeasures (and optionally their maintenance cost).

Accordingly, the risks of the industrial plant 1 can be comprehensively assessed before constructing the industrial plant 1 or while running the industrial plant 1. The safety of the industrial plant 1 can thereby be ensured.

In addition to the steps S1 to S6, the method of Fig. 3 further includes an optional step S7. The step S7 is performed between the steps S3 and S4 previously described. Namely, in step S7, the computer device detects errors and/or inconsistencies in the received process data 10 using the augmented graph 15. These errors and inconsistencies are corrected and accordingly, a corrected augmented graph (repaired graph) 16 is generated and used for the subsequent steps S5 - S6. Optionally, the graph repair may be performed based on a user input through a GUI.

Errors in the data 10 or in the graph 15 are identified by checking rules using the generated graph. For example, a valve (a node 18 in the graph 15) should have at least two outgoing edges or links 19 (to the predecessor node 18 and to the successor node 18), etc.

In yet a further embodiment of the invention, a method for operating an industrial plant 1 is provided, which includes the above-described method for identifying risks in an industrial plant 1. In this embodiment, a countermeasure is determined by the neural network, or based on the output of the neural network. The computing device then automatically issues an instruction to the industrial plant to implement the countermeasure, thereby affecting the operation of the industrial plant 1. For example, the countermeasure in that case may be opening or closing of a valve, shutting down one or more parts of the industrial plant 1 or even shutting down the industrial plant 1 entirely. Thus, the countermeasure can be implemented without further human intervention.

Although the present invention has been described in accordance with preferred embodiments, it is obvious for the person skilled in the art that modifications are possible in all embodiments.

### REFERENCE SIGNS

- 1: industrial plant
- 2: device
- 3: pipe
- 10: process data
- 11: P&ID data
- 12: piping information
- 13: substance data
- 14: CAE data
- 15: augmented graph
- 16: repaired graph
- 17: historical data
- 18: node
- 19: edge/link
- 20: description data
- 21: risk table
- S1: receiving process data
- S2: generating graph representing digital twin
- S3: adding description data to the graph/supplementing graph
- S4: identifying risks/determining deviations between augmented graph and predefined allowable process data
- S5: classifying at least one risk and/or determining a countermeasure using a trained neural network
- S6: outputting classification result
- S7: detecting errors and inconsistencies/correcting errors/inconsistencies

## Claims

1. A computer-implemented method for identifying risks in an industrial plant (1), the method including:
receiving (S1) process data (10), the process data (10) specifying a list of devices (2) belonging to the industrial plant (1), how the devices (2) are connected to each other, requirements for using the devices (2), and parameters relating to chemical substances to be used in the industrial plant (1);
generating (S2) a graph representing a digital twin of the industrial plant (1) based on the process data (10), the graph comprising nodes (18) representing the devices (2) of the industrial plant (1) and edges (19) linking the nodes (18) in accordance with the process data (10);
supplementing (S3) the graph with description data (20) derived from the process data (10) to obtain an augmented graph, the description data (20) providing specificities of the devices (2) and their connections;
identifying (S4) at least one risk in the industrial plant (1) by determining at least one deviation between the augmented graph and predefined allowable values for process parameters for operating the industrial plant (1), and determining a cause and a consequence associated with the risk;
classifying (S5) the identified risk based on its likelihood and/or its seriousness to obtain a classification result, and/or determining (S5) a countermeasure against the identified risk, wherein classifying (S5) the identified risk and/or determining (S5) the countermeasure is carried out using at least one neural network receiving the deviation, the cause and the consequence of the risk as its input; and
outputting (S6) the classification result and/or the determined countermeasure.

2. The method according to claim 1, wherein the input into the at least one neural network does not include any process data or process parameters.

3. The method according to claim 1 or 2, wherein the input into the at least one neural network consists only of the deviation, the cause and the consequence of the risk.

4. The method according to any of claims 1 to 3, wherein a first trained neural network is used to classify the identified risk, and a second trained neural network is used to determine a countermeasure.

5. The method according to any one of claims 1 to 4, wherein the cause is an event that caused the deviation.

6. The method according to any one of claims 1 to 5, wherein the consequence includes at least one of a breakdown of a component of the industrial plant or parts thereof, flying debris and a leakage of a chemical to the outside of the industrial plant (1).

7. The method according to any one of claims 1 to 6, wherein the parameters relating to chemical substances include a phase diagram, a steam pressure curve, a melting point, a dependence of density upon temperature, a dependence of viscosity upon temperature, an ignition temperature, and/or a decomposition temperature of the chemical substance.

8. The method according to any one of claims 1 to 7, wherein the method further includes:
detecting (S7) errors and/or inconsistencies in the received process data (10); and
outputting and/or correcting (S7) the detected errors and/or inconsistencies in the received process data (10) before generating the graph.

9. The method according to any one of claims 1 to 8, wherein the neural network is a neural network that was trained using training data sets that include a label indicating a cost function, wherein the neural network determines the countermeasure such as to minimize the cost function.

10. The method according to claim 9, wherein the cost function indicates the costs for installation and maintenance of the countermeasure and/or an outage time of the industrial plant (1) for installing and/or maintaining the countermeasure.

11. A method for operating an industrial plant (1), comprising:
the method according to any of claims 1 to 10, including determining a countermeasure against the identified risk, and
carrying out the determined countermeasure.

12. The method for operating an industrial plant (1) according to claim 11, wherein the countermeasure includes opening or closing of a valve, shutting down one or more devices (2) of the industrial plant (1) or shutting down the industrial plant (1) entirely.

13. A computer device for identifying risks in an industrial plant (1), the computer device including a processor for performing:
receiving (S1) process data (10), the process data (10) specifying a list of devices (2) belonging to the industrial plant (1), how the devices (2) are connected to each other, requirements for using the devices (2), and parameters relating to chemical substances to be used with the industrial plant (1);
generating (S2) a graph representing a digital twin of the industrial plant (1) based on the process data (10), the graph comprising nodes (18) representing the devices (2) of the industrial plant (1) and edges (19) linking the nodes (18) in accordance with the process data (10);
supplementing (S3) the graph with description data (20) derived from the process data (10) to obtain an augmented graph, the description data (20) providing specificities of the devices (2) and their connections;
identifying (S4) risks in the industrial plant (1) by determining deviations between the augmented graph and predefined allowable values for process parameters for operating the industrial plant (1);
using (S5) a neural network, classifying the identified risk based on its likelihood and/or its seriousness to obtain a classification result, and/or determining a countermeasure against the identified risk; and
outputting (S6) the classification result and/or the determined countermeasure.

14. The computer device according to claim 13 for performing the method steps according to any one of claims 1 to 12.

15. A computer program product comprising instructions which, when the program is executed by a computer, causes the computer to carry out the method of one of claims 1 to 12.

## Patentansprüche

1. Ein computerimplementiertes Verfahren zur Identifizierung von Risiken in einer Industrieanlage (1), wobei das Verfahren umfasst:
Empfangen (S1) von Prozessdaten (10), wobei die Prozessdaten (10) eine Liste von Geräten (2), die zur Industrieanlage (1) gehören, angeben, wie die Geräte (2) miteinander verbunden sind, Anforderungen für die Verwendung der Geräte (2) und Parameter in Bezug auf chemische Substanzen, die in der Industrieanlage (1) verwendet werden sollen;
Erzeugen (S2) eines Graphen, der einen digitalen Zwilling der Industrieanlage (1) darstellt, basierend auf den
Prozessdaten (10), wobei der Graph Knoten (18), die die Geräte (2) der Industrieanlage (1) repräsentieren, und Kanten (19), die die Knoten (18) gemäß den Prozessdaten (10) verbinden, umfasst;
Ergänzen (S3) des Graphen mit Beschreibungsdaten (20), die aus den Prozessdaten (10) abgeleitet werden, um einen erweiterten Graphen zu erhalten, wobei die Beschreibungsdaten (20) Besonderheiten der Geräte (2) und ihrer Verbindungen bereitstellen;
Identifizieren (S4) mindestens eines Risikos in der Industrieanlage (1) durch Bestimmen mindestens einer Abweichung zwischen dem erweiterten Graphen und vordefinierten zulässigen Werten für Prozessparameter zum Betrieb der Industrieanlage (1) sowie Bestimmen einer Ursache und einer Folge, die mit dem Risiko verbunden sind;
Klassifizieren (S5) des identifizierten Risikos basierend auf seiner Wahrscheinlichkeit und/oder seiner Schwere, um ein
Klassifizierungsergebnis zu erhalten, und/oder Bestimmen (S5) einer Gegenmaßnahme gegen das identifizierte Risiko, wobei das Klassifizieren (S5) des identifizierten Risikos und/oder das Bestimmen (S5) der Gegenmaßnahme unter Verwendung mindestens eines neuronalen Netzes durchgeführt wird, das die Abweichung, die Ursache und die Folge des Risikos als Eingabe erhält; und
Ausgeben (S6) des Klassifizierungsergebnisses und/oder der bestimmten Gegenmaßnahme.

2. Das Verfahren nach Anspruch 1, wobei die Eingabe in das mindestens eine neuronale Netz keine Prozessdaten oder Prozessparameter enthält.

3. Das Verfahren nach Anspruch 1 oder 2, wobei die Eingabe in das mindestens eine neuronale Netz ausschließlich aus der Abweichung, der Ursache und der Folge des Risikos besteht.

4. Das Verfahren nach einem der Ansprüche 1 bis 3, wobei ein erstes trainiertes neuronales Netz zur Klassifizierung des identifizierten Risikos verwendet wird und ein zweites trainiertes neuronales Netz zur Bestimmung einer Gegenmaßnahme verwendet wird.

5. Das Verfahren nach einem der Ansprüche 1 bis 4, wobei die Ursache ein Ereignis ist, das die Abweichung verursacht hat.

6. Das Verfahren nach einem der Ansprüche 1 bis 5, wobei die Folge mindestens eines von einem Ausfall einer Komponente der Industrieanlage oder von Teilen davon, umherfliegenden Trümmern und einem Austreten einer chemischen Substanz nach außerhalb der Industrieanlage (1) umfasst.

7. Das Verfahren nach einem der Ansprüche 1 bis 6, wobei die Parameter in Bezug auf chemische Substanzen ein Phasendiagramm, eine Dampfdruckkurve, einen Schmelzpunkt, eine Abhängigkeit der Dichte von der Temperatur, eine Abhängigkeit der Viskosität von der Temperatur, eine Zündtemperatur und/oder eine Zersetzungstemperatur der chemischen Substanz umfassen.

8. Das Verfahren nach einem der Ansprüche 1 bis 7, wobei das Verfahren ferner umfasst:
Erkennen (S7) von Fehlern und/oder Inkonsistenzen in den empfangenen Prozessdaten (10); und Ausgeben und/oder Korrigieren (S7) der erkannten Fehler und/oder Inkonsistenzen in den empfangenen Prozessdaten (10) vor dem Erzeugen des Graphen.

9. Das Verfahren nach einem der Ansprüche 1 bis 8, wobei das neuronale Netz ein neuronales Netz ist, das unter Verwendung von Trainingsdatensätzen trainiert wurde, die ein Label enthalten, das eine Kostenfunktion angibt, wobei das neuronale Netz die Gegenmaßnahme so bestimmt, dass die Kostenfunktion minimiert wird.

10. Das Verfahren nach Anspruch 9, wobei die Kostenfunktion die Kosten für die Installation und Wartung der Gegenmaßnahme und/oder eine Ausfallzeit der Industrieanlage (1) für die Installation und/oder Wartung der Gegenmaßnahme angibt.

11. Ein Verfahren zum Betreiben einer Industrieanlage (1), umfassend:
das Verfahren nach einem der Ansprüche 1 bis 10, einschließlich des Bestimmens einer Gegenmaßnahme gegen das identifizierte Risiko, und
Durchführen der bestimmten Gegenmaßnahme.

12. Das Verfahren zum Betreiben einer Industrieanlage (1) nach Anspruch 11, wobei die Gegenmaßnahme das Öffnen oder Schließen eines Ventils, das Abschalten eines oder mehrerer Geräte (2) der Industrieanlage (1) oder das vollständige Abschalten der Industrieanlage (1) umfasst.

13. Eine Computervorrichtung zur Identifizierung von Risiken in einer Industrieanlage (1), wobei die Computervorrichtung einen Prozessor zur Durchführung von Folgendem umfasst:
Empfangen (S1) von Prozessdaten (10), wobei die Prozessdaten (10) eine Liste von Geräten (2), die zur Industrieanlage (1) gehören, angeben, wie die Geräte (2) miteinander verbunden sind, Anforderungen für die Verwendung der Geräte (2) und Parameter in Bezug auf chemische Substanzen, die mit der Industrieanlage (1) verwendet werden sollen;
Erzeugen (S2) eines Graphen, der einen digitalen Zwilling der Industrieanlage (1) darstellt, basierend auf den Prozessdaten (10), wobei der Graph Knoten (18), die die Geräte (2) der Industrieanlage (1) repräsentieren, und Kanten (19), die die Knoten (18) gemäß den Prozessdaten (10) verbinden, umfasst;
Ergänzen (S3) des Graphen mit Beschreibungsdaten (20), die aus den Prozessdaten (10) abgeleitet werden, um einen erweiterten Graphen zu erhalten, wobei die Beschreibungsdaten (20) Besonderheiten der Geräte (2) und ihrer Verbindungen bereitstellen;
Identifizieren (S4) von Risiken in der Industrieanlage (1) durch Bestimmen von Abweichungen zwischen dem erweiterten Graphen und vordefinierten zulässigen Werten für Prozessparameter zum Betrieb der Industrieanlage (1);
Verwenden (S5) eines neuronalen Netzes, Klassifizieren des identifizierten Risikos basierend auf seiner Wahrscheinlichkeit und/oder seiner Schwere, um ein Klassifizierungsergebnis zu erhalten, und/oder Bestimmen einer Gegenmaßnahme gegen das identifizierte Risiko; und
Ausgeben (S6) des Klassifizierungsergebnisses und/oder der bestimmten Gegenmaßnahme.

14. Die Computervorrichtung nach Anspruch 13 zur Durchführung der Verfahrensschritte nach einem der Ansprüche 1 bis 12.

15. Ein Computerprogrammprodukt, das Anweisungen umfasst, die, wenn das Programm von einem Computer ausgeführt wird, den Computer veranlassen, das Verfahren nach einem der Ansprüche 1 bis 12 durchzuführen.

## Revendications

1. Un procédé mis en œuvre par ordinateur pour identifier des risques dans une installation industrielle (1), le procédé comprenant :
la réception (S1) de données de processus (10), les données de processus (10) spécifiant une liste de dispositifs (2) appartenant à l'installation industrielle (1), la manière dont les dispositifs (2) sont connectés les uns aux autres, les exigences relatives à l'utilisation des dispositifs (2), et des paramètres relatifs aux substances chimiques devant être utilisées dans l'installation industrielle (1) ;
la génération (S2) d'un graphe représentant un jumeau numérique de l'installation industrielle (1) sur la base des données de processus (10), le graphe comprenant des nœuds (18) représentant les dispositifs (2) de l'installation industrielle (1) et des arêtes (19) reliant les nœuds (18) conformément aux données de processus (10) ;
le complément (S3) du graphe avec des données de description (20) dérivées des données de processus (10) pour obtenir un graphe augmenté, les données de description (20) fournissant les spécificités des dispositifs (2) et de leurs connexions ;
l'identification (S4) d'au moins un risque dans l'installation industrielle (1) en déterminant au moins un écart entre le graphe augmenté et des valeurs admissibles prédéfinies pour les paramètres de processus pour l'exploitation de l'installation industrielle (1), et en déterminant une cause et une conséquence associées au risque ;
la classification (S5) du risque identifié sur la base de sa probabilité et/ou de sa gravité pour obtenir un résultat de classification, et/ou la détermination (S5) d'une contre-mesure contre le risque identifié, dans lequel la classification (S5) du risque identifié et/ou la détermination (S5) de la contre-mesure est effectuée à l'aide d'au moins un réseau neuronal recevant l'écart, la cause et la conséquence du risque en tant qu'entrée ; et
la sortie (S6) du résultat de classification et/ou de la contre-mesure déterminée.

2. Le procédé selon la revendication 1, dans lequel l'entrée dans l'au moins un réseau neuronal n'inclut aucune donnée de processus ni aucun paramètre de processus.

3. Le procédé selon la revendication 1 ou 2, dans lequel l'entrée dans l'au moins un réseau neu-ronal consiste uniquement en l'écart, la cause et la conséquence du risque.

4. Le procédé selon l'une quelconque des revendications 1 à 3, dans lequel un premier réseau neuronal entraîné est utilisé pour classifier le risque identifié, et un second réseau neuronal entraîné est utilisé pour déterminer une contre-mesure.

5. Le procédé selon l'une quelconque des revendications 1 à 4, dans lequel la cause est un événement ayant provoqué l'écart.

6. Le procédé selon l'une quelconque des revendications 1 à 5, dans lequel la conséquence comprend au moins l'un parmi une panne d'un composant de l'installation industrielle ou de parties de celle-ci, des débris projetés et une fuite d'un produit chimique vers l'extérieur de l'installation industrielle (1).

7. Le procédé selon l'une quelconque des revendications 1 à 6, dans lequel les paramètres relatifs aux substances chimiques comprennent un diagramme de phase, une courbe de pression de vapeur, un point de fusion, une dépendance de la densité en fonction de la température, une dépendance de la viscosité en fonction de la température, une température d'ignition et/ou une température de décomposition de la substance chimique.

8. Le procédé selon l'une quelconque des revendications 1 à 7, dans lequel le procédé comprend en outre : la détection (S7) d'erreurs et/ou d'incohérences dans les données de processus reçues (10) ; et la sortie et/ou la correction (S7) des erreurs et/ou incohérences détectées dans les
données de processus reçues (10) avant la génération du graphe.

9. Le procédé selon l'une quelconque des revendications 1 à 8, dans lequel le réseau neuronal est un réseau neuronal qui a été entraîné à l'aide d'ensembles de données d'entraînement comprenant une étiquette indiquant une fonction de coût, dans lequel le réseau neuronal détermine la contre-mesure de manière à minimiser la fonction de coût.

10. Le procédé selon la revendication 9, dans lequel la fonction de coût indique les coûts d'installation et de maintenance de la contre-mesure et/ou un temps d'arrêt de l'installation industrielle (1) pour l'installation et/ou la maintenance de la contre-mesure.

11. Un procédé pour exploiter une installation industrielle (1), comprenant :
le procédé selon l'une quelconque des revendications 1 à 10, comprenant la détermination d'une contre-mesure contre le risque identifié, et
la mise en œuvre de la contre-mesure déterminée.

12. Le procédé pour exploiter une installation industrielle (1) selon la revendication 11, dans lequel la contre-mesure comprend l'ouverture ou la fermeture d'une vanne, l'arrêt d'un ou plusieurs dispositifs (2) de l'installation industrielle (1) ou l'arrêt complet de l'installation industrielle (1).

13. Un dispositif informatique pour identifier des risques dans une installation industrielle (1), le dispositif informatique com-prenant un processeur pour effectuer :
la réception (S1) de données de processus (10), les données de processus (10) spécifiant une liste de dispositifs (2) appartenant à l'installation industrielle (1), la manière dont les dispositifs (2) sont connectés les uns aux autres les exigences relatives à l'utilisation des dispositifs (2), et des paramètres relatifs aux substances chimiques devant être utilisées avec l'installation industrielle (1) ;
la génération (S2) d'un graphe représentant un jumeau numérique de l'installation industrielle (1) sur la base des données de processus (10), le graphe comprenant des nœuds (18) représentant les dispositifs (2) de l'installation industrielle
(1) et des arêtes (19) reliant les nœuds (18) conformément aux données de processus (10)
; le complément (S3) du graphe avec des données de description (20) dérivées des données de processus (10) pour obtenir un graphe augmenté, les données de description (20) fournissant les spécificités des dispositifs (2) et de leurs connexions ;
l'identification (S4) de risques dans l'installation industrielle (1) en déterminant des écarts entre le graphe aug-menté et des valeurs admissibles prédéfinies pour les paramètres de processus pour l'exploitation de l'installation industrielle (1) ;
l'utilisation (S5) d'un réseau neuronal, la classification du risque identifié sur la base de sa probabilité et/ou de sa gravité pour obtenir un résultat de classification, et/ou la détermination d'une contre-mesure contre le risque identifié ; et
la sortie (S6) du résultat de classification et/ou de la contre-mesure déterminée.

14. Le dispositif informatique selon la revendication 13 pour effectuer les étapes de procédé selon l'une quelconque des revendications 1 à 12.

15. Un produit de programme informatique comprenant des instructions qui, lorsque le programme est exécuté par un ordinateur, amènent l'ordinateur à mettre en œuvre le procédé selon l'une des revendications 1 à 12.
